# EUROPÄISCHE PATENTANMELDUNG

(11) **EP 4 098 779 A1**
(43) Veröffentlichungstag der Anmeldung: **07.12.2022**
(21) Anmeldenummer: 22173370.2
(22) Anmeldetag: 13.05.2022
(51) Int. Cl.: C25D 21/12, B23H 3/10, G01N 21/3577, G01N 21/359, C25F 7/00

(54) **VERFAHREN ZUM UNTERSUCHEN EINER ELEKTROLYTLÖSUNG ZUR BEARBEITUNG EINES BAUTEILWERKSTOFFS EINES FLUGTRIEBWERKS**

(30) Priorität: 31.05.2021 DE 102021114039
(71) Anmelder: MTU Aero Engines AG, 80995 München (DE)
(72) Erfinder: Feiling, Nicole, 80995 München (DE); Auerweck, Johann, 80995 München (DE)

(57) **Zusammenfassung**

Verfahren zum Untersuchen einer Elektrolytlösung (22) zur Bearbeitung eines Bauteils (12), insbesondere eines Bauteils oder Bauteilwerkstoffs eines Flugtriebwerks, mittels Nahinfrarotspektroskopie.

## Beschreibung

Die Erfindung betrifft ein Verfahren zum Untersuchen einer Elektrolytlösung zur Bearbeitung eines Bauteilwerkstoffs eines Flugtriebwerks.

Elektrolytlösungen enthalten dissoziierte Ionen, die sich unter dem Einfluss eines elektrischen Feldes gerichtet bewegen, und werden für zahlreiche Prozesse zur Bearbeitung von Bauteilwerkstoffen für Flugtriebwerke benötigt. Bei diesen Bauteilwerkstoffen kann es sich um Werkstoffe bzw. Halbzeuge handeln, die zur Herstellung bestimmter Flugtriebwerkbauteile verwendet werden, oder um die Werkstoffe bereits fertiger Bauteile, die unter Verwendung einer Elektrolytlösung gereinigt, weiterbearbeitet oder repariert bzw. überholt werden sollen. Bei diesen Bauteilwerkstoffen bzw. Bauteilen kann es sich beispielsweise um Blisks aus Ni- oder Ti-Basislegierungen, Niederdruckturbinen-Scheiben und generell um alle Bauteile bzw. Bauteilwerkstoffe handeln, die geätzt, beschichtet oder gereinigt werden sollen. Beispielsweise werden bei der elektrochemischen Metallbearbeitung ((Hochgenaues) elektrochemisches Abtragen, (P)ECM) Legierungsbestandteile des Werkstückes mittels Elektrolyse aufgelöst und gehen als Elektrolyt in Lösung. Je nach Werkstoffgruppe findet eine anodische Metallauflösung in dafür geeigneten wässrigen Elektrolytlösungen statt. Die entstandenen Metallkationen (z.B. Ni²⁺, Fe²⁺, Fe³⁺, Cr⁶⁺ usw.) reichern sich entweder kontinuierlich im Elektrolyten an oder werden direkt als Metallhydroxid ausgefällt und durch z.B. Filtration aus dem System entfernt. Beispielsweise wird für die Bearbeitung von Nickelbasislegierungen normalerweise eine Natriumnitratlösung mit definierter Konzentration verwendet.

Analog werden Elektrolytlösungen für die Vorbehandlung von Bauteilen zur anschließenden CBN-Beschichtung, beispielsweise zur Herstellung von Schaufelspitzenpanzerung, verwendet und enthalten Mischungen von Ammoniumbifluorid und Salpetersäure. Weiterhin werden zur Vorbehandlung von Ti-enthaltenden bzw. -basierenden Bauteilwerkstoffen wässrige Elektrolytlösungen aus Essigsäure und Flusssäure verwendet. Weitere Einsatzfelder von Elektrolytlösungen bei der Bearbeitung von Bauteilwerkstoffen für Flugtriebwerk umfassen die Bauteil- bzw. Bauteilwerkstoffreinigung sowie galvanische Standardprozesse wie Vernickeln, Verchromen und so weiter.

Um eine gleichbleibende Elektrolytqualität und damit eine hohe Bearbeitungsqualität des Bauteilwerkstoffs bzw. Bauteils sicherzustellen, müssen Elektrolytlösungen überwacht werden. Aktuell werden dazu im Serienprozess die Parameter Temperatur, pH-Wert und Leitwert überwacht und entsprechend gesteuert bzw. geregelt.

Weiterhin ist für einen stabilen Bearbeitungsprozess die Elektrolytzusammensetzung von großer Bedeutung. Für die Bestimmung der Zusammensetzung, die in Abhängigkeit der jeweiligen Elektrolytlösung variiert, wird derzeit manuell eine Probe genommen und im Labor "nasschemisch" oder mittels Ionenchromatographie analysiert.

Als problematisch an dem bisherigen Untersuchungsverfahren ist der Umstand anzusehen, dass die manuellen Untersuchungen aufwändig und langwierig sind, so dass keine kontinuierliche Überwachung möglich ist und keine aktuellen Messwerte zur Charakterisierung der Elektrolytlösung verfügbar sind. Damit ist auch keine gezielte Steuerung bzw. Regelung der entsprechenden Bauteilbearbeitung bzw. der Bearbeitung des Bauteilwerkstoffs möglich. Stattdessen führen die langen Reaktionszeiten zwischen Messung und Messergebnis häufig bereits zu zwischenzeitlichen Abweichungen und Prozessschwankungen, was entsprechende Qualitätseinbußen nach sich zieht. Werden solche Qualitätseinbußen festgestellt, ist umgekehrt häufig keine zuverlässige Information über die zum Herstellungszeitpunkt verwendete Elektrolytlösung vorhanden.

Aufgabe der vorliegenden Erfindung ist es, eine verbesserte Untersuchungsmöglichkeit von Elektrolytlösungen zur Bearbeitung von Bauteilwerkstoffen für Flugtriebwerke zu schaffen.

Die Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den Unteransprüchen angegeben.

Ein erster Aspekt der Erfindung betrifft ein Verfahren zum Untersuchen einer Elektrolytlösung zur Bearbeitung eines Bauteils, insbesondere eines Bauteils oder Bauteilwerkstoffs eines Flugtriebwerks, wobei die Untersuchung erfindungsgemäß mittels Nahinfrarotspektroskopie erfolgt. Nahinfrarotspektroskopie (NIRS) ist ein Untersuchungsverfahren, bei welchem mittels eines Nahinfrarotspektrometers die Wechselwirkung zwischen Licht im Nahinfrarotbereich (NIR, 780 bis 2500 nm bzw. ca. 13.000-4.000 cm⁻¹) des elektromagnetischen Spektrums und den Inhaltsstoffen der Elektrolytlösung untersucht wird. Die Elektrolytlösung wird hierzu beispielsweise in geeigneter Weise in eine Messkammer des Nahinfrarotspektrometers transportiert bzw. eingefüllt. Das Nahinfrarotspektrometer kann dabei grundsätzlich in eine Anlage integriert sein, in welcher die zu untersuchende Elektrolytlösung verwendet werden soll. Diese Wechselwirkung zwischen Licht und den Inhaltsstoffen induziert Oberton- und Kombinationsbanden-Molekülschwingungen, die mit der NIRS detektiert werden können. Aufgrund der höheren Energie des nahinfraroten Lichts im Vergleich zum mittleren Infrarot und der geringeren Absorptionskoeffizienten ergibt sich eine vergleichsweise große Eindringtiefe in die Elektrolytlösung, so dass Schichtdicken im Millimeterbereich untersucht werden können. Weiterhin kann die Elektrolytlösung mit der NIRS unmittelbar bzw. nativ untersucht werden, so dass keine vorgeschaltete Probenname, Extraktion oder dergleichen erforderlich ist. Bei Transmissions- bzw. Absorbanz-Messungen in einem mit der Elektrolytlösung befüllten Reaktor, einer die Elektrolytlösung führenden Leitung, einem Elektrolytlösungstank oder dergleichen ist die NIRS zudem wenig anfällig für Verschmutzungen. Weiterhin sind mit NIRS Echtzeitmessungen der Elektrolytlösung möglich, so dass eine unmittelbare Einbindung des Untersuchungsergebnisses beispielsweise in die Leitwarte möglich ist. Die bisherigen manuellen Schritte zur Probenaufnahme und - untersuchung können vollständig entfallen, wodurch die Untersuchung besonders schnell, einfach und kostengünstig durchgeführt werden kann. Die NIRS kommt zudem als physikalisches Untersuchungsverfahren ohne Chemikalieneinsatz aus und bietet den weiteren Vorteil einer besonders kurzen Messdauer von etwa 1 Minute oder weniger. NIRS kann zudem mehrere Parameter innerhalb einer Untersuchung (Scan) analysieren. Dies verkürzt die Zeit bis zum Untersuchungsergebnis, da die Mehrfachanalyse durch nur eine einzige NIR-Messung abgedeckt werden kann. Die NIRS kann zudem sehr einfach angewendet werden, so dass diese auch von Nichtfachleuten durchgeführt werden kann. Die NIRS ist zudem zerstörungsfrei und verändert damit die Elektrolyselösung während der Analyse nicht. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer vorteilhaften Ausgestaltung der Erfindung ist vorgesehen, dass die Elektrolytlösung kontinuierlich und/oder in vorbestimmten Zeitabständen mittels Nahinfrarotspektroskopie untersucht wird und/oder dass wenigstens eine Komponente der Elektrolytlösung mittels Nahinfrarotspektroskopie qualitativ und/oder quantitativ bestimmt wird. Durch eine kontinuierliche und/oder regelmäßige Untersuchung der Elektrolytlösung kann sichergestellt werden, dass etwaige Probleme früh erkannt und rechtzeitig behoben werden können, bevor es zu Prozessstörungen und Qualitätseinbußen des bearbeiteten Bauteils bzw. Bauteilwerkstoffs kommt. Eine qualitative und/oder quantitative Bestimmung ist insbesondere von Komponenten möglich, die asymmetrische Bindungen (-NH, -OH, -SH, -CH etc.) aufweisen sowie von Komponenten mit einem induzierbaren Dipolmoment. Die detektierten Molekülschwingungen werden dabei in der Regel nicht direkt interpretiert, sondern mit Hilfe von statistischen Verfahren ausgewertet.

In einer vorteilhaften Ausgestaltung der Erfindung ist vorgesehen, dass wenigstens ein Qualitätsparameter der Elektrolytlösung anhand eines Ergebnisses der nahinfrarotspektroskopischen Untersuchung ermittelt wird. Hierdurch ist es möglich, die Qualität der Elektrolytlösung zu objektivieren und gegebenenfalls kontinuierlich oder regelmäßig zu prüfen.

In einer vorteilhaften Ausgestaltung der Erfindung ist vorgesehen, dass anhand des Ergebnisses der nahinfrarotspektroskopischen Untersuchung geprüft wird, ob die Elektrolytlösung ein vorgegebenes Qualitätskriterium erfüllt. Dies ermöglicht es, eine Mindestqualität und - zusammensetzung der Elektrolytlösung zu definieren, die erfüllt sein muss, um eine prozesssichere Bearbeitung des Bauteils bzw. Bauteilwerkstoffs sicherstellen zu können.

Vorzugsweise ist es vorgesehen, dass die Elektrolytlösung zur Bearbeitung des Bauteilwerkstoffs verwendet wird, wenn sie das vorgegebene Qualitätskriterium erfüllt, und/oder bei welchem die Elektrolytlösung nicht zur Bearbeitung des Bauteilwerkstoffs verwendet wird, wenn sie das vorgegebene Qualitätskriterium nicht erfüllt. Auf diese Weise wird sichergestellt, dass das Bauteil bzw. der Bauteilwerkstoff nur dann unter Verwendung der Elektrolytlösung bearbeitet wird, wenn diese die entsprechende Mindestqualität und -zusammensetzung aufweist. Sobald das Qualitätskriterium nicht erfüllt ist, kann die Bearbeitung je nach Bearbeitungsverfahren und - verfahrensstadium beispielsweise nicht begonnen, unterbrochen oder abgebrochen werden.

In einer vorteilhaften Ausgestaltung der Erfindung ist vorgesehen, dass die Elektrolytlösung modifiziert, insbesondere gereinigt und/oder eingestellt, wird, wenn sie das vorgegebene Qualitätskriterium nicht erfüllt. Hierdurch ist eine Steuerung bzw. Regelung der Elektrolytlösungszusammensetzung möglich, so dass eine möglichst gleichbleibende Elektrolytzusammensetzung sichergestellt werden kann. Beispielsweise kann beim Erkennen einer unzulässigen Verarmung einer bestimmten Komponente diese Komponente der Elektrolytlösung in entsprechender Menge zugeführt bzw. in der Elektrolytlösung erzeugt werden, um das Qualitätskriterium wieder zu erfüllen. Umgekehrt kann die Elektrolytlösung beim Erkennen einer unzulässigen Anreicherung einer bestimmten Komponente verdünnt werden. Alternativ oder zusätzlich kann die betreffende Komponente bis zur zulässigen Konzentration abgereichert, beispielsweise ausgefällt werden.

In einer weiteren vorteilhaften Ausgestaltung der Erfindung ist es vorgesehen, dass mittels eines Mensch-Maschine-Interfaces ein Warnhinweis erzeugt wird, wenn die Elektrolytlösung das vorgegebene Qualitätskriterium nicht erfüllt. Der Warnhinweis kann beispielsweise haptisch, akustisch oder optisch erfolgen, um beispielsweise eine Aufsichtsperson auf das Problem einer unzulässigen Elektrolytlösungszusammensetzung hinzuweisen. Das Mensch-Maschine-Interface kann hierzu in geeigneter Form, beispielsweise kabelgebunden oder drahtlos, zum Datenaustausch mit dem Nahinfrarotspektrometer gekoppelt sein und ein entsprechendes Signal zum Erzeugen des Warnhinweises erhalten, wenn das Qualitätskriterium nicht erfüllt wird.

In einer vorteilhaften Ausgestaltung der Erfindung ist vorgesehen, dass die Elektrolytlösung modifiziert wird, bis sie das vorgegebene Qualitätskriterium erfüllt, wobei das Modifizieren anhand wenigstens einer weiteren nahinfrarotspektroskopischen Untersuchung der Elektrolytlösung gesteuert und/oder geregelt wird. Mit anderen Worten wird die Nahinfrarotspektroskopie vorteilhaft auch zur Kontrolle bei der Wiederherstellung der gewünschten Elektrolytlösungszusammensetzung verwendet, wodurch kein zusätzlicher apparativer und analytischer Aufwand erforderlich ist.

Vorzugsweise ist es vorgesehen, dass mittels Nahinfrarotspektroskopie eine oder mehrere Komponenten aus der Gruppe Wasser, Nitrat, Sulfat, Fluorid, Chlorid und Essigsäure in der Elektrolytlösung qualitativ und/oder quantitativ ermittelt wird bzw. werden. Hierdurch kann für die allermeisten Bearbeitungsverfahren von Flugtriebwerksbauteilen bzw. -bauteilwerkstoffen eine ausreichend zuverlässige und aussagekräftige Untersuchung der dabei verwendeten Elektrolytlösungen erreicht werden.

In einer weiteren vorteilhaften Ausgestaltung der Erfindung ist es vorgesehen, dass die Elektrolytlösung zur elektrochemischen Metallbearbeitung ((P)ECM) des Bauteilwerkstoffs und/oder zur Vorbehandlung des Bauteilwerkstoffs für CBN-Beschichtung und/oder zur Vorbehandlung von Ti-haltigen Bauteilwerkstoffen und/oder zur Reinigung des Bauteilwerkstoffs und/oder für ein galvanisches Beschichtungsverfahren, insbesondere für Vernickeln, verwendet wird und/oder bei welchem die Elektrolytlösung zum Bearbeiten eines Bauteils aus der Gruppe Blisk, Bling und Niederdruckturbinenscheiben verwendet wird. Hierdurch kann das Verfahren vorteilhaft für die wichtigsten Bauteile und Bauteilwerkstoffe von Flugtriebwerken eingesetzt werden.

In einer vorteilhaften Ausgestaltung der Erfindung ist vorgesehen, dass die nahinfrarotspektroskopische Untersuchung mittels eines Fourier-Transformations-basierten (FT-NIR) und/oder eines dispersiven Spektrometers durchgeführt wird. Verglichen mit dispersiv arbeitenden NIR-Spektrometern zeichnet sich ein FTIR-Spektrometer durch kürzere Messzeiten und ein besseres Signal-Rausch-Verhältnis aus, wodurch es sich zur Messung niedrigerer Konzentrationen eignet. Der Vorteil von dispersiven NIR-Spektrometern besteht darin, dass sie sowohl das sichtbare (Vis) als auch das nahe Infrarotlicht (NIR) zur Analyse der Proben verwenden können, was die möglichen Anwendungsmöglichkeiten erhöht.

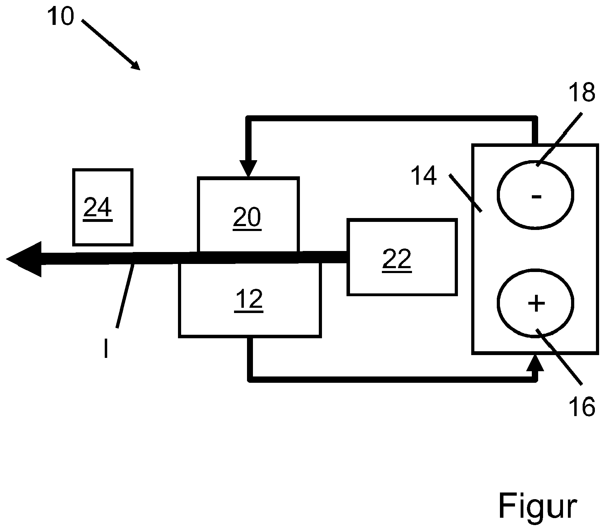

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt die einzige Figur eine Prinzipdarstellung einer Vorrichtung zum präzisen elektrochemischen Abtragen.

Die einzige **Figur** zeigt eine Prinzipdarstellung einer Vorrichtung 10 zur elektrochemischen Metallbearbeitung (ECM) eines Bauteilwerkstoffs 12 für ein Flugtriebwerk (nicht gezeigt). Bei der ECM handelt es sich um ein kontaktfreies Bearbeitungsverfahren ohne Wärmeeintrag. Die Vorrichtung 10 umfasst eine Gleichspannungsquelle 14 mit einer Anode 16 (+) und einer Kathode 18 (-). Die Kathode 18 ist galvanisch mit einem Werkzeug 20 gekoppelt, während die Anode 16 galvanisch mit dem vorliegend elektrisch leitfähigen Bauteilwerkstoff 12 gekoppelt ist. Zwischen dem Werkzeug 20 und dem Bauteilwerkstoff 12 wird gemäß Pfeil I eine wässrige Elektrolytlösung 22 geleitet, durch welche zwischen der Kathode 18 und der Anode 16 ein Ladungsaustausch stattfindet, durch den eine anodische Auflösung des Bauteilwerkstoffs 12 erfolgt. Auf diese Weise können verschiedene geometrische Merkmale wie beispielsweise Kanäle, Nuten, Konturen und dergleichen berührungslos mit hoher Präzision im Bauteilwerkstoff 12 hergestellt werden. Das dabei abgetragene Material des Bauteilwerkstoffs 12 fällt als Metallhydroxid aus der Elektrolytlösung 22 aus. Die Bearbeitung erfolgt unabhängig vom Gefügezustand des Bauteilwerkstoffs 12, so dass sowohl weiche als auch harte Metalle sowie intermetallische Bauteilwerkstoffe 12 bearbeitet werden können. Das bedeutet, dass nicht nur praktisch alle Metalle, sondern auch hochlegierte Werkstoffe wie Nickelbasislegierungen, Titanlegierungen oder gehärtete Werkstoffe bearbeitet werden können.

Bezüglich einer mit Pfeil I gekennzeichneten Fließrichtung der Elektrolytlösung 22 ist stomabwärts des Bauteilwerkstoffs 12 ein Nahinfrarotspektrometer 24 angeordnet, mittels welchem die Elektrolytlösung 22 nahinfrarotspektroskopisch untersucht wird. Grundsätzlich kann das Nahinfrarotspektrometer 24 auch stromauf des Bauteilwerkstoffs 12 angeordnet sein. Alternativ können zwei oder mehr Nahinfrarotspektrometer 24 stromauf und stromab des Bauteilwerkstoffs 12 angeordnet sein. Ebenso kann vorgesehen sein, dass einem einzelnen Nahinfrarotspektrometer 24 über entsprechende Zuführungsleitungen (nicht gezeigt) stromaufwärtige und/oder stromabwärtige Proben der Elektrolytlösung 22 zur Untersuchung zugeführt werden können. Die Vorrichtung 10 stellt einen eigenständigen Erfindungsaspekt dar.

Die Elektrolytlösung 22 wird kontinuierlich und/oder in vorbestimmten Zeitabständen mittels Nahinfrarotspektroskopie untersucht, wobei vorzugsweise wenigstens eine Komponente der Elektrolytlösung 22 mittels der Nahinfrarotspektroskopie qualitativ und/oder quantitativ bestimmt wird. Die jeweils untersuchte(n) Komponente(n) hängen von der Zusammensetzung der Elektrolytlösung 22 ab. Beispielsweise können bei der (P)ECM, in welcher häufig Natriumnitrathaltige Elektrolytlösungen 22 verwendet werden, die Komponenten Nitrat/Sulfat bestimmt werden. Bei anderen Verfahren wie etwa der Vorbehandlung für CBN-Beschichtungen für Schaufelspitzenpanzerung enthalten die Elektrolytlösungen 22 häufig Ammoniumbifluorid/Salpetersäure. In diesem Fall kann beispielsweise der Gehalt der Elektrolytlösung 22 an freien Fluorid-Ionen untersucht werden. Bei der Vorbehandlung von Ti-basierten Werkstoffen wird häufig eine wässrige Mischung von Essigsäure und Flusssäure als Elektrolytlösung 22 verwendet, so dass die Komponenten HOAc und/oder HF und/oder H₂O ermittelt werden können. Bei Elektrolytlösungen 22, die Salpeter- und Flusssäure enthalten, können entsprechend die Komponenten HF und/oder HNO₃ untersucht werden. Davon abgesehen können mit Hilfe der Nahinfrarotspektroskopie grundsätzlich auch Elektrolytlösungen 22 untersucht werden, die zur Reinigung und/oder für galvanische Standardprozesse wie etwa Vernickeln, Verchromen etc. verwendet werden.

Anhand des Ergebnisses der nahinfrarotspektroskopischen Untersuchung kann beispielsweise mit Hilfe einer Recheneinrichtung (nicht gezeigt) geprüft werden, ob die Elektrolytlösung 22 ein vorgegebenes Qualitätskriterium erfüllt. Die Recheneinrichtung kann Teil des Nahinfrarotspektrometers 24 sein oder zum Datenaustausch mit diesem drahtlos oder kabelgebunden gekoppelt sein. Sollte die Elektrolytlösung 22 das Qualitätskriterium nicht erfüllen, kann gegebenenfalls ein optischer, haptischer und/oder akustischer Warnhinweis über eine Mensch-Maschine-Schnittstelle erfolgen, die ebenfalls Teil des Nahinfrarotspektrometers 24 sein oder zum Datenaustausch mit diesem drahtlos oder kabelgebunden gekoppelt sein kann.

Wenn ein solches Qualitätsproblem detektiert wird, kann die Elektrolytlösung 22 in einer Ausführungsform modifiziert werden, bis sie das vorgegebene Qualitätskriterium wieder erfüllt. Das Modifizieren kann dabei ebenfalls durch nahinfrarotspektroskopische Untersuchung der Elektrolytlösung 22 gesteuert und/oder geregelt werden. Das Modifizieren kann beispielsweise eine Filtration der Elektrolytlösung 22 und/oder Konzentrationseinstellungen bestimmter Komponenten umfassen.

Falls kein Qualitätsproblem detektiert wird, kann die Elektrolytlösung 22 gegebenenfalls in einem Kreislauf geführt werden.

Auf diese Weise können verschiedene Bauteiltypen wie Blisks bzw. Blings (aus Ni- und/oder Ti-Basislegierungen), Niederdruckturbinen-Scheiben und generell alle Bauteile 12, die geätzt oder gereinigt werden sollen, bearbeitet werden.

Die Vorrichtung 10 bzw. das beschriebene Verfahren ermöglichen eine Online-Messung von Elektrolytlösungen 22 mittels Nahinfrarot-Spektroskopie (NIR). Dabei kann eine qualitative und/oder quantitative Bestimmung von Komponenten mit asymmetrischen Bindungen (-NH, - OH, -SH, -CH) sowie induzierbaren Dipolmomenten durchgeführt werden. Dies ermöglicht eine Echtzeitmessung, eine Einbindung der Untersuchung und des Untersuchungsergebnisses in eine Leitwarte, was eine kontinuierliche Prozessregelung und eine schnelle Reaktion beim Auftreten von Problemen erlaubt. Das Nahinfrarotspektrometer 24 bzw. das Untersuchungsverfahren kann einfach in bestehende Anlagen integriert werden und erlaubt eine Untersuchung ohne zusätzlichen manuellen Aufwand. Das Untersuchungsverfahren kommt zudem ohne Chemikalieneinsatz aus und kann ein Messergebnis innerhalb einer Minute oder weniger produzieren. Damit können auch etwaige Störfälle schneller erkannt werden.

Bei der (P)ECM kann durch die kontinuierliche Untersuchung mit einer automatischen Steuerung bzw. Regelung der Elektrolytzugabe verknüpft werden, um eine gleichbleibende Elektrolytzusammensetzung zu erreichen. Bei galvanischen Verfahren kann eine besonders hohe Qualitätssicherung realisiert werden. Ebenso wird die Standzeit von Prozessbädern erhöht, was zu geringeren Entsorgungskosten und einer besseren Umweltbilanz führt.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

### Bezugszeichenliste:

- 10: Vorrichtung
- 12: Bauteil
- 14: Gleichspannungsquelle
- 16: Anode
- 18: Kathode
- 20: Werkzeug
- 22: Elektrolytlösung
- 24: Nahinfrarotspektrometer
- I: Fließrichtung Elektrolytlösung

## Patentansprüche

1. Verfahren zum Untersuchen einer Elektrolytlösung (22) zur Bearbeitung eines Bauteils (12), ins-besondere eines Bauteils oder Bauteilwerkstoffs eines Flugtriebwerks, mittels Nahinfrarotspekt-roskopie.

2. Verfahren nach Anspruch 1, bei welchem die Elektrolytlösung (22) kontinuierlich und/oder in vorbestimmten Zeitabständen mittels Nahinfrarotspektroskopie untersucht wird und/oder bei welchem wenigstens eine Komponente der Elektrolytlösung (22) mittels Nahinfrarotspektroskopie qualitativ und/oder quantitativ bestimmt wird.

3. Verfahren nach Anspruch 1 oder 2, bei welchem wenigstens ein Qualitätsparameter der Elektrolytlösung (22) anhand eines Ergebnisses der nahinfrarotspektroskopischen Untersuchung ermittelt wird.

4. Verfahren nach einem der Ansprüche 1 bis 3, bei welchem anhand des Ergebnisses der nahinfrarotspektroskopischen Untersuchung geprüft wird, ob die Elektrolytlösung (22) ein vorgegebenes Qualitätskriterium erfüllt.

5. Verfahren nach Anspruch 4, bei welchem die Elektrolytlösung (22) zur Bearbeitung des Bauteilwerkstoffs (12) verwendet wird, wenn sie das vorgegebene Qualitätskriterium erfüllt, und/oder bei welchem die Elektrolytlösung (22) nicht zur Bearbeitung des Bauteilwerkstoffs (12) verwendet wird, wenn sie das vorgegebene Qualitätskriterium nicht erfüllt.

6. Verfahren nach Anspruch 4 oder 5, bei welchem die Elektrolytlösung (22) modifiziert, insbesondere gereinigt und/oder eingestellt, wird, wenn sie das vorgegebene Qualitätskriterium nicht erfüllt, und/oder bei welchem mittels eines Mensch-Maschine-Interfaces ein Warnhinweis erzeugt wird, wenn die Elektrolytlösung (22) das vorgegebene Qualitätskriterium nicht erfüllt.

7. Verfahren nach Anspruch 6, bei welchem die Elektrolytlösung (22) modifiziert wird, bis sie das vorgegebene Qualitätskriterium erfüllt, wobei das Modifizieren anhand wenigstens einer weiteren nahinfrarotspektroskopischen Untersuchung der Elektrolytlösung (22) gesteuert und/oder geregelt wird.

8. Verfahren nach einem der Ansprüche 1 bis 7, bei welchem mittels Nahinfrarotspektroskopie eine oder mehrere Komponenten aus der Gruppe Wasser, Nitrat, Sulfat, Fluorid, Chlorid und Essigsäure in der Elektrolytlösung (22) qualitativ und/oder quantitativ ermittelt wird.

9. Verfahren nach einem der Ansprüche 1 bis 8, bei welchem die Elektrolytlösung (22) zur elektrochemischen Metallbearbeitung ((P)ECM) des Bauteilwerkstoffs (12) und/oder zur Vorbehandlung des Bauteilwerkstoffs (12) für CBN-Beschichtung und/oder zur Vorbehandlung von Ti-haltigen Bauteilwerkstoffen (12) und/oder zur Reinigung des Bauteilwerkstoffs (12) und/oder für ein galvanisches Beschichtungsverfahren, insbesondere für Vernickeln, verwendet wird und/oder bei welchem die Elektrolytlösung (22) zum Bearbeiten eines Bauteils aus der Gruppe Blisk, Bling und Niederdruckturbinenscheiben verwendet wird.

10. Verfahren nach einem der Ansprüche 1 bis 9, bei welchem die nahinfrarotspektroskopische Untersuchung mittels eines Fourier-Transformations-basierten (FT-NIR) und/oder eines dispersiven Spektrometers durchgeführt wird.
